# Europäisches Patentamt
# European Patent Office
# Office européen des brevets

(19)

(11) Veröffentlichungsnummer: **0 286 631**
**B1**

(12) ## EUROPÄISCHE PATENTSCHRIFT

(45) Veröffentlichungstag der Patentschrift:
**05.09.90**

(51) Int. Cl.⁵: **A01C 7/04**

(21) Anmeldenummer: **88890088.3**

(22) Anmeldetag: **08.04.88**

(54) Pneumatische Einzelkornsämaschine.

(30) Priorität: **10.04.87 AT 896/87**

(43) Veröffentlichungstag der Anmeldung:
**12.10.88 Patentblatt 88/41**

(45) Bekanntmachung des Hinweises auf die Patenterteilung:
**05.09.90 Patentblatt 90/36**

(84) Benannte Vertragsstaaten:
**BE CH DE FR GB IT LI LU**

(56) Entgegenhaltungen:
**EP-A- 0 216 057**
**AT-B- 218 776**
**AT-B- 364 660**
**DD-A- 120 110**
**DE-A- 2 310 979**

(73) Patentinhaber: **STEYR-DAIMLER-PUCH AKTIENGESELLSCHAFT, Franz-Josefs-Kai 51, A-1010 Wien(AT)**

(72) Erfinder: **Knell, Karl, Dipl.-Ing., A-4400 Steyr im Pyrach 28(AT)**

## Beschreibung

Die Erfindung betrifft eine pneumatische Einzelkornsämaschine zur mehrreihigen Aussaat mit einer Vielzahl nebeneinander angeordneter drehbarer Säscheiben, die in ihrem Umfangsbereich Samentaschen aufweisen.

Dabei werden die Samenkörner in der Regel durch Unterdruck in die Samentaschen gesaugt bzw. darin festgehalten und nach einem bestimmten Drehwinkel der Säscheibe durch Nachlassen des Unterdruckes bzw. durch Druckluft in einen Ablegeschacht abgegeben.

Bei bisherigen Einzelkornsämaschinen dieser Art ist für jede Säreihe ein eigenes Säaggregat vorgesehen, welche Säaggregate zu einer Gesamtmaschine zusammengebaut und jeweils mit einer Zuleitung für das Saatgut und für die Druckluft sowie mit einer Absaugleitung ausgestattet sind. Dieser Zusammenbau gesonderter Säaggregate bringt verschiedene schwerwiegende Nachteile mit sich. Abgesehen davon, daß ein verhältnismäßig hoher Bauaufwand erforderlich ist, können die Säscheiben aus konstruktiven Gründen nur mit verhältnismäßig großem Abstand voneinander angeordnet werden,d.h. es läßt sich bei der Aussaat ein bestimmter Reihenabstand nicht unterschreiten, obwohl es in manchen Fällen wünschenswert wäre, den Abstand der nebeneinanderliegenden Körner etwa gleich groß wie den Abstand hintereinander angeordneter Körner zu wählen. Außer der Engreihenaussaat sollte aber auch bei verschiedenem Saatgut der Reihenabstand über das Mindestmaß hinaus vergrößert werden können, was bei den bisherigen aus mehreren Aggregaten zusammengesetzten Sämaschinen ebenfalls kaum möglich ist. Ein weiterer Mangel ist auch darin zu erblicken, daß sich die Säscheiben der Einzelaggregate nicht ohne weiteres auswechseln bzw. austauschen lassen, so daß auch der Kornabstand innerhalb einer Reihe ohne Verminderung oder Erhöhung der Fahrgeschwindigkeit nicht verändert werden kann und die Form bzw. Größe der Samentaschen an verschiedene Samenkorngrößen nicht anpaßbar ist. Schließlich ist wegen der Zuleitungen zu den Einzelaggregaten und der Einzelantriebe der Raum oberhalb der Aggregate verbaut, so daß es nicht möglich ist, mit einer unmittelbar vor der Sämaschine laufenden Bodenfräse das abgearbeitete Bodenmaterial über die Maschine hinweg zu werfen, um die Samenkörner direkt auf den Fräshorizont abzulegen und hinterher abzudecken.

Es ist zwar bereits eine pneumatische Einzelkornsämaschine zu mehrreihigen Kornabgabe bekannt (DD-PS 120 110), bei der an Stelle von nebeneinander angeordneten Säscheiben eine durchlaufende Säwalze vorgesehen ist, die an ihrem Umfang die Samentaschen aufweist und einen entsprechenden Saatgutbehälter zugeordnet hat. Die Säwalze besitzt einen zweiteiligen Innenraum, der den Anschlußkanal für die Luftzuführung und den entsprechenden Kanal für die Luftabführung bildet, wobei der Unter- bzw. Überdruckraum von der Walzenstirnseite her beaufschlagt wird. Die nebeneinander angeordneten Samentaschen der Säwalze können durch Einsätze im Saatgutbehälter fallweise abgedeckt werden, um sowohl die Engreihenaussaat als auch eine Vergrößerung der Reihenabstände zu ermöglichen. Nachteilig ist hier, daß der Abstand der Saatkörner innerhalb einer Reihe nicht verändert werden kann und daß es auch nicht möglich ist, die Samentaschen der verschiedenen Korngröße von unterschiedlichem Saatgut anzupassen. Dadurch besteht die Gefahr, daß das Festhalten der Körner in den Samentaschen nicht immer gewährleistet ist bzw. daß eine Verstopfung der von den Samentaschen zum Walzeninnenraum führenden Leitungsbohrungen auftritt.

Es ist auch schon eine Einzelkornsämaschine bekannt (AT-PS 218 776), bei der in einem mit einer oberen Eintrittsöffnung und einem unteren Austrittsschlitz versehenen Hüllrohr eine Säwalze angeordnet ist, die drehbar auf einer festen stehenden Büchse lagert. Das Särohr weist mehrere in Achsrichtung nebeneinander und in Umfangsrichtung verteilt angeordnete Aufnahmelöcher für die durch die obere Eintrittsöffnung des Hüllrohres zulaufenden Samenkörner auf, die im Bereich des unteren Austrittsschlitzes des Hüllrohres mit Hilfe von in der Büchse vorgesehenen Auswerfrädern ausgestoßen werden, wobei die Auswerfräder zahnradartig mit Umfangszapfen ausgestattet sind, die bei der Särohrdrehung nacheinander in die Aufnahmelöcher eindringen. Im Bereich der oberen Eintrittsöffnung kann eine Abdeckung vorgesehen sein, um die Anzahl der nebeneinanderliegenden Saatreihen zu verändern. Auch hier ist der Abstand der Saatkörner innerhalb einer Reihe nicht veränderbar und es ist ebenso unmöglich, die Aufnahmelöcher der verschiedenen Korngröße von unterschiedlichem Saatgut anzupassen. Durch das rein mechanische Ausstoßen besteht überdies die Gefahr einer Saatgutverletzung.

Schließlich ist eine Einzelkornsämaschine bekannt (AT-PS 364 660), bei der eine aus einem feststehenden Scheibenkörper und einem drehbaren Scheibenblatt bestehende Säscheibe vorgesehen ist. Das Scheibenblatt ist an einer den Scheibenkörper umschließenden Trommel befestigt, die auf drei im Trommelinneren angeordneten Laufrollen lagert und außen einen Zahnkranz für eine Antriebskette trägt. Auch hier ist ein eigener Zulauf für die Samenkörner einerseits und ein zu einem Sauggebläse führender Kanal andererseits vorgesehen, so daß sich insgesamt ein verhältnismäßig kompliziertes Einzelaggregat ergibt, das keines der bei der mehrreihigen Aussaat auftretenden Probleme löst.

Somit liegt der Erfindung die Aufgabe zugrunde, diese Mängel zu beseitigen und eine pneumatische Einzelkornsämaschine der eingangs geschilderten Art zu schaffen, die bei vergleichsweise einfacher Konstruktion sowohl eine Änderung der Reihenabstände bis auf ein sehr geringes Mindestmaß als auch eine Vergrößerung bzw. Verkleinerung der Kornabstände innerhalb einer Reihe ermöglicht, eine Anpassung an verschiedene Korngrößen erlaubt und von einer gegebenenfalls unmittelbar vorgeordneten Bodenfräse leicht überworfen werden kann.

Die Erfindung löst die gestellte Aufgabe dadurch, daß die Säscheiben in einem gemeinsamen Gehäuse angeordnet sind und jede Säscheibe zwischen je zwei Schottwänden angeordnet und auswechselbar bzw. gegen taschenlose Blindscheiben austauschbar gelagert ist, wobei sich jede Säscheibe auf wenigstens drei Laufrollen abstützt, von denen wenigstens eine dem Säscheibenantrieb dient und eine zur Freigabe der Säscheibe von dieser abhebbar ist.

Da also die Säscheiben voneinander nur durch die Schottwände getrennt sind, können sie den geringstmöglichen Abstand voneinander erhalten, was sich selbstverständlich in einem entsprechend geringen Reihenabstand auswirkt. Es ist aber auch möglich, den Reihenabstand zu vergrößern, wenn zwischen je zwei Säscheiben eine oder mehrere Blindscheiben eingesetzt werden, was keine Schwierigkeiten bereitet, da jede Säscheibe bzw. Blindscheibe lediglich auf den Laufrollen abgestützt ist und durch Freigabe der einen Stützrolle leicht entfernt bzw. durch eine andere Säscheibe ersetzt oder gegen eine Blindscheibe ausgetauscht werden kann. Die Auswechselbarkeit der Säscheiben hat aber auch den weiteren wesentlichen Vorteil, daß Säscheiben mit verschiedener Anzahl der Samentaschen bzw. verschieden großen oder geformten Samentaschen auf Lager gehalten und je nach Bedarf verwendet werden können, so daß bei entsprechender Auswahl der Säscheiben ein verschiedener Kornabstand innerhalb einer Reihe und eine genaue Anpassung an die jeweilige Korngröße erreichbar sind.

Um eine möglichst geringe Bauhöhe der Maschine sowie eine Vereinfachung der Konstruktion zu erreichen, sind in den Säscheiben und gegebenenfalls Blindscheiben achsparallele,mit den Samentaschen leitungsverbundene Bohrungen angeordnet. Die Schottwände weisen jeweils zwei etwa nierenförmige, im Bohrungsbereich liegende Durchbrechungen auf und die Bohrungen bilden mit den Durchbrechungen Strömungskanäle für die Druck- bzw. Saugluft von der Gehäusestirnseite her. Es erübrigen sich also gesonderte Luftzu- bzw. -ableitungen zu den einzelnen Säscheiben, so daß über diesen nur vergleichsweise wenig Raum benötigt wird und es somit auch kein Problem bereitet, daß der Auswurf einer der Sämaschine unmittelbar vorgeordneten Bodenfräse über die Sämaschine hinweg erfolgt.

Um auch Einzelzuleitungen zu den Säscheiben für das Saatgut zu vermeiden, bildet erfindungsgemäß das Gehäuse einen für alle Säscheiben gemeinsamen Saatgutbehälter, der von der Gehäusestirnseite her beschickbar ist und eine Einrichtung zur Saatgutverteilung in Behälterlängsrichtung aufweist. Durch die Beschickung von der Stirnseite her bleibt die Sämaschine im Auswurfbereich einer etwaigen Bodenfräse frei von störenden Bauteilen, wobei die Verteileinrichtung dafür sorgt, daß trotz der Beschickung des Saatgutbehälters von der Stirnseite her allen Säscheiben genügend Saatgut zugeführt wird.Die Verteileinrichtung könnte aus einem in Längsrichtung des Behälters, also parallel zur Säscheibenachse gerichteten Förderer beliebiger Bauart bestehen.

Um die Säscheiben von einer gemeinsamen Welle her antreiben zu können, ohne den Einzelausbau der Säscheiben zu beeinträchtigen, liegt an den Säscheiben zwischen dem Zuführ- und Abgabebereich der Samenkörner je ein Antriebsriemen an, der über zwei der Laufrollen gespannt ist, von denen eine auf einer für alle Säscheiben gemeinsamen Antriebswelle sitzt und die andere an einem federnd gegen die Säscheibe gedrückten Schwenkhebel gelagert ist. Durch Verschwenken dieses Hebels wird die Säscheibe frei und kann ausgebaut werden. Der Antriebsriemen hat den Vorteil, daß er im Bereich zwischen der Samenkornzufuhr und -abfuhr die Samentaschen abdeckt und somit die Funktionssicherheit erhöht. Dabei ist es besonders zweckmäßig, wenn der Schwenkhebel zweiteilig als Kniehebel ausgebildet ist, so daß sich eine feste Anlage der betreffenden Laufrolle bzw. des Riemens an der Säscheibe ergibt und keine Schwingungen auftreten.

In weiterer Ausbildung der Erfindung ist schließlich jeweils zwischen der am Schwenkhebel gelagerten Laufrolle und der benachbarten, ausschließlich der Säscheibenabstützung dienenden Laufrolle ein abnehmbarer Ablegeschacht für die Samenkörner vorgesehen. Die Säscheiben können also durch jenen Laufrollenzwischenraum ausgebaut bzw. eingesetzt werden, in dem sich der Ablegeschacht befindet, was den Vorteil mit sich bringt, daß dann der Saatgutbehälter mit seiner Verteileinrichtung auf der anderen Seite der lediglich der Abstützung dienenden Laufrolle, also vergleichsweise tief und nicht störend angeordnet werden kann.

In der Zeichnung ist der Erfindungsgegenstand in einem Ausführungsbeispiel etwas vereinfacht dargestellt, und zwar zeigen

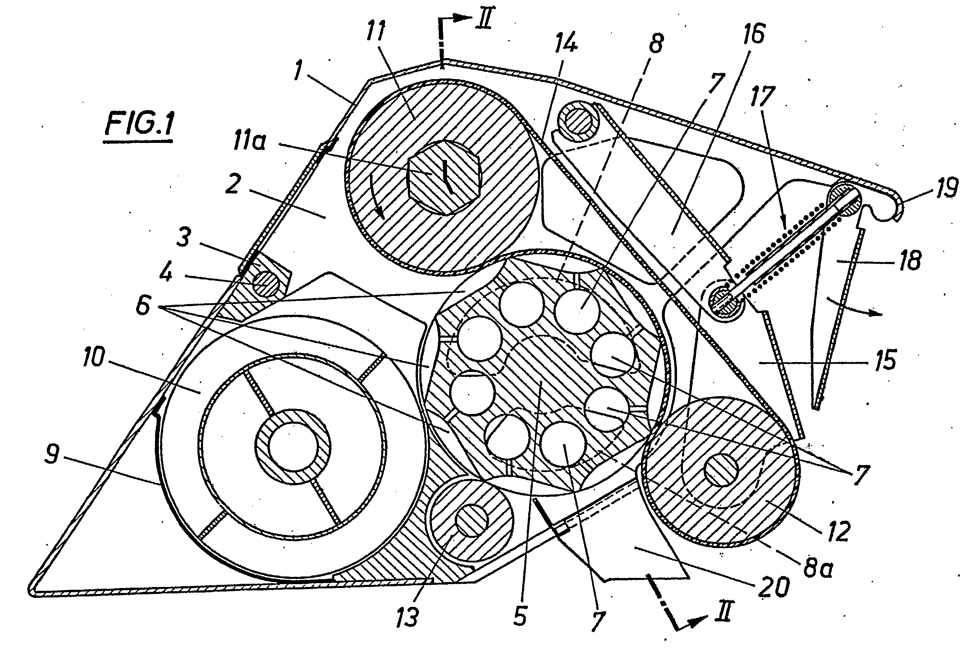

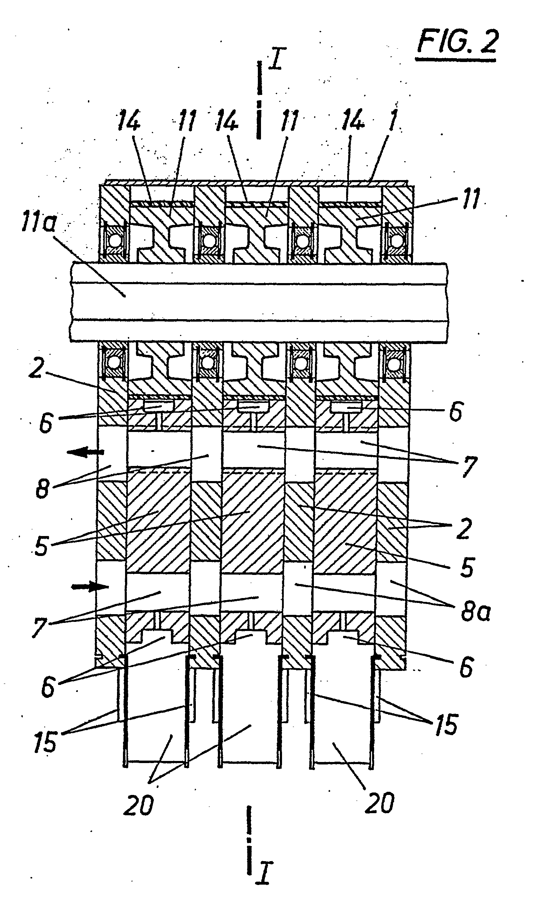

Fig. 1 eine Einzelkornsämaschine im Querschnitt nach der Linie I-I der Fig. 2 und

Fig. 2 einen Teil dieser Maschine im Längsschnitt nach der Linie II-II der Fig. 1.

Das Maschinengehäuse 1, das mit nicht dargestellten Laufrädern versehen ist, weist eine Vielzahl von in Fahrtrichtung, also quer zur Gehäuselängsrichtung liegenden Schottwänden 2 auf, die durch Distanzstücke 3 im Abstand gehalten und durch Schrauben 4 zusammengespannt sind. Zwischen je zwei Schottwänden ist eine Säscheibe 5 drehbar angeordnet, die an ihrem Umfang Samentaschen 6 aufweist. Die Säscheiben 5 sind mit achsparallelen Bohrungen 7 versehen, die mit den Samentaschen 6 in Leitungsverbindung stehen. Die Schottwände 2 weisen im Bereich dieser Bohrungen 7 etwa nierenförmige Durchbrechungen 8, 8a auf, wobei die Durchbrechungen 8 mit den Bohrungen 7 einen Strömungskanal für Saugluft und die Durchbrechungen 8a mit den Bohrungen 7 einen Strömungskanal für Druckluft bilden und sich der Saugleitungsanschluß bzw. die Druckluftquelle an einer der Stirnseiten des Gehäuses 1 befindet.

Das Gehäuse 1 bildet einen für alle Säscheiben 5 gemeinsamen Saatgutbehälter 9, in dem eine Einrichtung zur Saatgutverteilung in Behälterlängsrichtung, beispielsweise eine Förderschnecke 10, angeordnet ist. Die Beschickung der Förderschnecke od.dgl. erfolgt von einer Gehäusestirnseite her.

Die Säscheiben 5 sind auf keiner eigenen Welle gelagert, sondern bloß auf drei Laufrollen 11, 12, 13 abgestützt, wobei die Laufrollen 11 auf einer gemeinsamen Antriebswelle 11a sitzen und an den Säscheiben 5 je ein Antriebsriemen 14 anliegt, der über die Laufrollen 11 und 12 gespannt ist. Die Laufrollen 12 sind jeweils an dem einen Arm 15 eines als Kniehebel ausgebildeten Schwenkhebels 15, 16 gelagert, an dem an seinem Gelenk ein Federbein 17 angreift, dessen obere Abstützung an einem als Winkelhebel ausgebildeten Betätigungsgriff 18 vorgesehen ist. Die Feder des Federbeins 17 hat das Bestreben, den Kniehebel 15, 16 in seine Strecklage zu bringen, so daß der Riemen 14 fest an die Säscheibe 5 angedrückt wird. Soll die Säscheibe 5 gegen eine Säscheibe mit anders geformten Samentaschen ausgewechselt oder überhaupt durch eine taschenlose Blindscheibe ersetzt werden, so wird der Betätigungsgriff 18 entgegen dem Uhrzeigersinn um die Achse seiner Lagerpfanne 19 bewegt, so daß zunächst das Federbein 17 zusammengedrückt und dann der Hebelarm 15 bzw. die Laufrolle 12 von der Säscheibe 5 weggeschwenkt wird. Zwischen der auf diese Weise wegschwenkbaren Laufrolle 12 und der lediglich zur Säscheibenabstützung dienenden Laufrolle 13 ist ein abnehmbarer Ablegeschacht 20 für die Körner vorgesehen, so daß nach dessen Entfernung die Säscheibe 5 nach unten ausgebaut bzw. von unten eingesetzt werden kann.

Während des Betriebes werden die von der Förderschnecke 10 von der Gehäusestirnseite zu den einzelnen Säscheiben gebrachten Samenkörner im Förderschneckenbereich in die Samentaschen 6 angesaugt, von der sich im Uhrzeigersinn drehenden Säscheibe 5 mitgenommen und dann in den Ablegeschacht 20 fallen gelassen, da der obere Bereich der Säscheibe an die Saugluftleitung und der untere Bereich an die Druckluftleitung angeschlossen sind.

## Patentansprüche

1. Pneumatische Einzelkornsämaschine zur mehrreihigen Aussaat mit einer Vielzahl nebeneinander angeordneter drehbarer Säscheiben (5), die in ihrem Umfangsbereich Samentaschen (6) aufweisen, dadurch gekennzeichnet, daß die Säscheiben (5) in einem gemeinsamen Gehäuse (1) angeordnet sind und jede Säscheibe zwischen je zwei Schottwänden (2) angeordnet und auswechselbar bzw. gegen taschenlose Blindscheiben austauschbar gelagert ist, wobei sich jede Säscheibe (5) auf wenigstens drei Laufrollen (11, 12, 13) abstützt, von denen wenigstens eine (11) dem Säscheibenantrieb dient und eine (12) zur Freigabe der Säscheibe (5) von dieser abhebbar ist.

2. Einzelkornsämaschine nach Anspruch 1, dadurch gekennzeichnet, daß in den Säscheiben (5) und gegebenenfalls Blindscheiben achsparallele, mit den Samentaschen (6) leitungsverbundene Bohrungen (7) angeordnet sind, die Schottwände (2) jeweils zwei etwa nierenförmige, im Bohrungsbereich liegende Durchbrechungen (8, 8a) aufweisen und die Bohrungen (7) mit den Durchbrechungen (8, 8a) Strömungskanäle für Druck- bzw. Saugluft von der Gehäusestirnseite her bilden.

3. Einzelkornsämaschine nach Anspruch 1, dadurch gekennzeichnet, daß das Gehäuse (1) einen für alle Säscheiben (5) gemeinsamen Saatgutbehälter (9) bildet, der von der Gehäusestirnseite her beschickbar ist und eine Einrichtung (10) zur Saatgutverteilung in Behälterlängsrichtung aufweist.

4. Einzelkornsämaschine nach Anspruch 1, dadurch gekennzeichnet, daß an den Säscheiben (5) zwischen dem Zuführ- und Abgabebereich der Samenkörner je ein Antriebsriemen (14) anliegt, der über zwei (11, 12) der Laufrollen (11, 12, 13) gespannt ist, von denen eine (11) auf einer für alle Säscheiben (5) gemeinsamen Antriebswelle (11a) sitzt und die andere (12) an einem federnd gegen die Säscheibe (5) gedruckten Schwenkhebel (15, 16) gelagert ist.

5. Einzelkornsämaschine nach Anspruch 4, dadurch gekennzeichnet, daß der Schwenkhebel (15, 16) zweiteilig als Kniehebel ausgebildet ist.

6. Einzelkornsämaschine nach Anspruch 4 oder 5, dadurch gekennzeichnet, daß jeweils zwischen der am Schwenkhebel (15, 16) gelagerten Laufrolle (12) und der benachbarten, ausschließlich der Säscheibenabstützung dienenden Laufrolle (13) ein abnehmbarer Ablegeschacht (20) für die Samenkörner vorgesehen ist.

## Claims

1. A pneumatic drill for placing spaced apart seeds in a plurality of rows, comprising a multiplicity of juxtaposed, rotatable seeding disks (5), which are provided with seed pockets (6) adjacent to their periphery, characterized in that the seeding disks (5) are arranged in a common housing (1), each seeding disk is disposed between two bulkheads (2) and is mounted to be replaceable by another seeding disk or by a pocketless dummy disk, each seeding disk (5) is supported on at least three rollers (11, 12, 13), at least one (11) of which serves to drive the seeding disk and one (12) of which is adapted to be lifted from the seeding disk (5) to release the same.

2. A drill for placing spaced apart seeds according to claim 1, characterized in that the seeding disks (5) and optionally also the dummy disks are provided with axially parallel bores (7), which communicate with the seed pockets (6), each bulkhead (2) comprises two approximately cardioid apertures (8, 8a) adjacent to the bores and the bores (7) and apertures (8, 8a) constitute flow passages for the compressed air and the sucked air, which passages lead to the end face of the housing.

3. A drill for placing spaced apart seeds according to claim 1, characterized in that the housing (1) constitutes a seed container (9), which is common to all seeding disks (5) and is adapted to be fed from the end face of the housing and comprises means (10) for distributing the seeds in the longitudinal direction of the container.

4. A drill for placing spaced apart seeds according to claim 1, characterized in that each seeding disk (5) is engaged by a drive belt (14) between the regions in which the seeds are supplied and discharged and said drive belt is trained around two (11, 12) of the rollers (11, 12, 13), one (11) of which is mounted on a drive shaft (11a), which is common to all seeding disks (5), whereas the other roller (12) is movably mounted on a pivoted lever (15, 16), which is resiliently urged against the seeding disk (5).

5. A drill for placing spaced apart seeds according to claim 4, characterized in that the pivoted lever (15, 16) is bipartite and constitutes a toggle joint.

6. A drill for placing spaced apart seeds according to claim 4 or 5, characterized in that a detachable duct (20) for discharging the seeds is provided between the roller (12) which is movably mounted on the pivoted lever (15, 16) and the adjacent roller (13) which serves only to support the seeding disk.

## Revendications

1. Semoir individuel pneumatique pour l'ensemencement de plusieurs rangs avec une pluralité de disques d'ensemencement rotatifs (5) disposés côte à côte qui présentent des poches pour semence à leur périphérie, caractérisé en ce que les disques d'ensemencement (5) sont disposés dans un carter commun (1), et que chaque disque d'ensemencement est monté entre deux cloisons de séparation (2) en étant échangeable et en pouvant être remplacé contre un disque d'ensemencement plein sans poche pour semence, chaque disque d'ensemencement s'appuyant contre au moins trois galets de roulement parmi lesquels l'un (11) au moins sert à l'entraînement en rotation de ce disque d'ensemencement, et un autre (12) peut être soulevé et éloigné du disque d'ensemencement (5) pour la libération de ce dernier.

2. Semoir selon la revendication 1 caractérisé en ce que, dans les disques d'ensemencement (5) et éventuellement dans les disques pleins sans poche, sont réalisés des trous (7) parallèles axialement, tenus en liaison par des conduits avec les poches pour semence (6), les cloisons de séparation (2) ont chacune des ouvertures traversantes (8, 8a) à peu près oblongues, situées dans la région desdits trous et ces trous (7) constituent avec les ouvertures traversantes (8, 8a) des canaux d'écoulement pour de l'air sous pression ou de l'air aspiré à partir d'une face extrême du carter.

3. Semoir individuel selon la revendication 1, caractérisé en ce que le carter (1) constitue, pour tous les disques d'ensemencement (5), un récipient commun (9) de semence, qui peut être rempli à partir d'une race extrême de ce carter et qui présente un dispositif (10) pour la répartition des semences dans le sens longitudinal du récipient.

4. Semoir individuel selon la revendication 1 caractérisé en ce que, contre les disques d'ensemencement (5), entre la région d'arrivée et la région du distribution des graines, sont appuyées des courroies d'entraînement (14) respectives qui sont tendues chacune à l'aidé de deux galets (11, 12), de galets de roulement (11 à 13), parmi lesquels l'un (11) est calé sur un arbre d'entraînement (11a) commun à tous les disques d'ensemencement (5), et l'autre (12) est monté tournant sur un levier pivotant (15, 16) appuyé élastiquement contre le disque d'ensemencement (5).

5. Semoir individuel selon la revendication 4 caractérisé en ce que le levier pivotant (15, 16) est composé de deux pièces assemblées en un mécanisme du type à genouillère.

6. Semoir individuel selon l'une quelconque des revendications 4, 5 caractérisé en ce qu'il existe une goulotte amovible (20) de distribution des graines de semence entre chaque galet de roulement (12) monté sur le levier pivotant (15, 16) et le galet de roulement voisin (13) servant seulement de soutien au disque d'ensemencement correspondant.

FIG.1

_FIG. 2_